# EUROPEAN PATENT APPLICATION

(11) **EP 4 574 750 A1**
(43) Date of publication of application: **25.06.2025**
(21) Application number: 23219349.0
(22) Date of filing: 21.12.2023
(51) Int. Cl.: C01B 3/04

(54) **PROCESS FOR THE PRODUCTION OF HYDROGEN FROM AMMONIA**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Ulber, Dieter, 60439 Frankfurt am Main (DE); Jarolin, Kolja, 60439 Frankfurt am Main (DE)
(74) Representative: Air Liquide

(57) **Abstract**

The invention relates to a process (1) for the production of hydrogen from ammonia comprising the following steps:
- providing an ammonia feed stream to a reactor (2),
- feeding an oxidant stream comprising oxygen to the reactor (3),
- in a first zone of the reactor, non-catalytically partially oxidizing the ammonia feed stream with the oxidant stream (4), thus generating heat and producing a partially oxidized stream containing ammonia, nitrogen, water, amounts of nitrogen oxides, and potentially a residual portion of oxygen.
- in a second zone of the reactor, homogenizing the temperature and concentration of the partially oxidized stream (5), thus producing an homogenized stream containing ammonia, nitrogen, and water,
- in a third zone of the reactor, catalytically cracking ammonia contained in the homogenized stream in an endothermic reaction using the generated heat (6), thus creating a cracked gas product containing nitrogen and hydrogen
- withdrawing the cracked gas product from the reactor (7).

## Description

The field of the present invention is that of a process for producing a cracked gas product comprising hydrogen by an endothermic cracking reaction of an ammonia feed stream. The invention also relates to an apparatus for producing a cracked gas product comprising hydrogen by an endothermic cracking reaction of an ammonia feed stream. The invention also relates to the use of such an apparatus for ammonia cracking.

In the ammonia cracking process, gaseous ammonia is dissociated into a mixture of hydrogen and nitrogen in the reversible reaction:

2 NH3 # N2 + 3 H2

The reaction is endothermic, requiring heat for maintaining the ammonia cracking reaction. Heat can be obtained by a combustion reaction.

It has been found that the heat produced in the exothermic non-catalytic oxidation of ammonia by the following reaction

2 NH3 + 3/2 O2 → N2 + 3 H2O

may be sufficient to provide the necessary heat when subsequently performing the endothermic catalytic cracking of ammonia.

The combination of the exothermic reaction with the endothermic cracking reaction is called autothermal cracking. Autothermal cracking of ammonia allows CO2 free production of a hydrogen product in the sense that the process does not generate any CO2.

However, the process of autothermal cracking of ammonia also produces nitrogen oxides (NOx) during the reaction. The production of nitrogen oxides is in particular due to the inhomogeneous reacting conditions inside the reactor.

This invention aims at preventing the formation of NOx during the ammonia autothermal cracking, and at reducing the quantity of NOx present in the cracked gas product.

The invention relates to a process for the production of hydrogen from ammonia comprising the following steps:
providing an ammonia feed stream to a reactor,
feeding an oxidant stream comprising oxygen to the reactor,
in a first zone of the reactor, non-catalytically partially oxidizing the ammonia feed stream with the oxidant stream, thus generating heat and producing a partially oxidized stream containing ammonia, nitrogen, water, amounts of nitrogen oxides, and potentially a residual portion of oxygen,
in a second zone of the reactor, homogenizing the temperature and concentration of the partially oxidized stream, thus producing an homogenized stream containing ammonia, nitrogen, and water,
in a third zone of the reactor, catalytically cracking ammonia contained in the homogenized stream in an endothermic reaction using the generated heat, thus creating a cracked gas product containing nitrogen and hydrogen
withdrawing the cracked gas product from the reactor.

According to one embodiment, the proportion of oxygen is under-stoechiometric in the step of non-catalytical partial oxidation of the ammonia feed stream.

Alternatively, the oxidant stream is provided in surplus, and the partially oxidized stream comprises a portion of oxygen that has not reacted during the non-catalytical partial oxidation of the ammonia feed stream.

As the reaction of non-catalytically partially oxidizing the ammonia feed stream is never perfect, the oxidized stream comprises traces of oxygen that have not reacted during the reaction.

According to one embodiment, the step of feeding an oxidant stream comprising oxygen to the reactor comprises :
A step of mixing a main oxidant stream with the ammonia feed stream, and feeding said main oxidant stream to the reactor together with the ammonia feed stream,

A step of providing an additional oxidant stream comprising oxygen to the reactor, the additional oxidant stream being kept separated from the ammonia feed stream upstream the reactor.

According to one embodiment, a portion of the main oxidant stream fed together with the ammonia feed stream does not react during the step of partial oxidation of the ammonia feed stream, and is comprised inside the oxidized stream/

Advantageously, feeding a main oxidant stream mixed with the ammonia feed stream allows to increase the portion of residual oxygen inside the partially oxidized stream.

According to one embodiment, the cracked gas product comprises hydrogen and nitrogen, in addition with water and/or an unconverted portion of ammonia that has not reacted during the step of catalytically cracking the ammonia.

According to one embodiment, the step of catalytically cracking ammonia is performed over a catalytic cracking layer of the reactor.

According to one embodiment, the step of homogenizing the temperature and concentration of the partially oxidized stream is performed over a reactor packing, in particular a reactor packing supported by the catalytic cracking layer.

According to one embodiment, the step of homogenizing the temperature and concentration of the partially oxidized stream comprises :
a step of homogenizing the temperature of the partially oxidized stream inside the second zone,
a step of homogenizing the concentration of the partially oxidized stream, in particular homogenizing the concentration of ammonia, nitrogen oxides and potential residual oxygen inside the partially oxidized stream.

According to one embodiment, the step of homogenizing the temperature and concentration of the partially oxidized stream reduces the production of nitrogen oxides during the cracking of the homogenized stream.

According to one embodiment, the step of homogenizing the temperature and concentration of the partially oxidized stream is performed downstream the step of partially oxidizing the ammonia feed stream, in the direction of the ammonia feed stream flow.

According to one embodiment, the step of homogenizing the temperature and concentration of the partially oxidized stream is performed upstream the step of catalytically cracking the homogenized stream in the direction of the homogenized stream flow.

According to one embodiment, the step of homogenizing the concentration of ammonia, nitrogen oxides and oxygen inside the partially oxidized stream comprises a step of reducing the amounts of nitrogen oxides inside the homogenized stream.

According to one embodiment, the step of reducing the amounts of nitrogen oxides inside the homogenized stream comprises a step of reacting the nitrogen oxides with oxygen and ammonia.

According to one embodiment, the process comprises a step of controlling the temperature inside the second zone of the reactor.

According to one embodiment, the temperature inside the second zone of the reactor is comprised between 600°C and 1200°C, preferably between 700 and 1 100°C.

According to one embodiment, the step of controlling the temperature inside the second zone of the reactor is performed by adjusting the ratio of the oxidant stream in relation to the ammonia feed stream.

According to one embodiment, during the step of homogenizing the temperature and concentration of the partially oxidized stream, the variation of the temperature of the partially oxidized stream after contact with the second zone of the reactor, in particular after contact with the reactor packing, is less than 200°C, preferably less than 100°C.

According to one embodiment, the process comprises a step of recovering hydrogen from the cracked gas product, thus producing a hydrogen product.

The invention also proposes a reactor arranged for the production of hydrogen from ammonia comprising :
a first zone arranged to non-catalytically partially oxidize an ammonia feed stream with an oxidant stream and to generate heat for producing a partially oxidized stream containing ammonia, nitrogen, water and amounts of nitrogen oxides,
a second zone comprising a reactor packing arranged to homogenize the temperature and concentration of the partially oxidized stream and to produce an homogenized stream containing ammonia, nitrogen and water,
a third zone arranged to catalytically crack the ammonia contained in the homogenized stream and to create a cracked gas product containing nitrogen and hydrogen,
an ammonia feed stream duct arranged to feed said ammonia feed stream to said reactor,
an oxidant stream duct arranged to feed said oxidant stream to the reactor.

According to one embodiment, the first zone of the reactor is placed upstream the second zone of the reactor in the direction of the ammonia feed stream.

According to one embodiment, the second zone of the reactor is placed upstream the third zone of the reactor in the direction of the homogenized stream.

According to one embodiment, the reactor comprises a cracked gas product duct arranged to withdraw the cracked gas product from the reactor.

According to one embodiment, the oxidant feed stream duct is arranged to feed an additional oxidant feed stream to the reactor.

According to one embodiment, the reactor comprises a main oxidant stream duct, fluidically connected to the oxidant feed stream duct and to the ammonia feed stream duct.

According to one embodiment, the main oxidant stream duct is arranged to route a portion of the oxidant feed stream, called the main oxidant stream, to the ammonia feed stream duct, and to mix said main oxidant stream with the ammonia feed stream.

According to one embodiment, the reactor packing consists of a non-catalyic NOx reduction packing.

According to one embodiment, the non-catalytic NOx reduction packing does not comprise any usual catalytic elements for promoting an endothermic reaction such as ammonia cracking. In particular, the non-catalytic NOx reduction packing does not comprise any Nickel, Cobalt, Iron or precious metal catalyst.

According to one embodiment, the reactor packing is made of metal or of a metal oxide, for example alumina.

According to one embodiment, the reactor packing is made of a random packing. The reactor packing is in particular composed of randomly arranged particles, for example alumina lumps or thermal protection tiles. Said thermal protection tiles are for example made of a refractory material.

Alternatively, the reactor packing is made of a structured packing.

According to one embodiment, the reactor packing for example comprises a stacking of perforated metal plates.

Advantageously, the use of non-catalytic material allows the NOx reduction packing to sustain higher temperatures, for example temperatures above 1000°C.

According to one embodiment, the reactor packing is arranged to maximize the surface area inside the second zone of the reactor.

Advantageously, maximizing the surface area allows to facilitate the homogenization of the concentration and temperature of the partially oxidized stream.

According to one embodiment, the reactor packing is arranged to increase the pressure drop between the first and third zone of the reactor.

For example, the reactor packing is configured such that the pressure drop over the second zone of the reactor is higher than 0.005 bar, preferably higher than 0.01 bar.

According to one embodiment, the third zone comprises a catalytic cracking layer.

In one embodiment, the catalytic cracking layer supports the reactor packing. In other words, the reactor packing is lying on the catalytic cracking layer.

According to one embodiment, the catalytic cracking layer comprises a catalyst, for example a Nickel containing catalyst.

According to one embodiment, the reactor comprises an envelope wherein the first zone, the second zone and the third zone are arranged. In particular, the reactor packing and the catalytic cracking layer are arranged in said envelope.

According to one embodiment, the envelope comprises a cylindrical portion.

According to one embodiment, the reactor packing and the catalytic cracking layer are cylindrical and placed in the cylindrical portion of the envelope.

The invention also proposes an apparatus arranged for the production of hydrogen from ammonia comprising :
A reactor as described,

A hydrogen recovery unit arranged to recover hydrogen from the cracked gas product, thus producing an hydrogen product.

Further features, details and advantages of the invention will become more clearly apparent from reading the description given below by way of indication with reference to the drawings, in which:
[Fig 1] is a schematic view of the process according to an embodiment of the invention,
[Fig. 2] is a schematic view of the apparatus according to an embodiment of the invention,

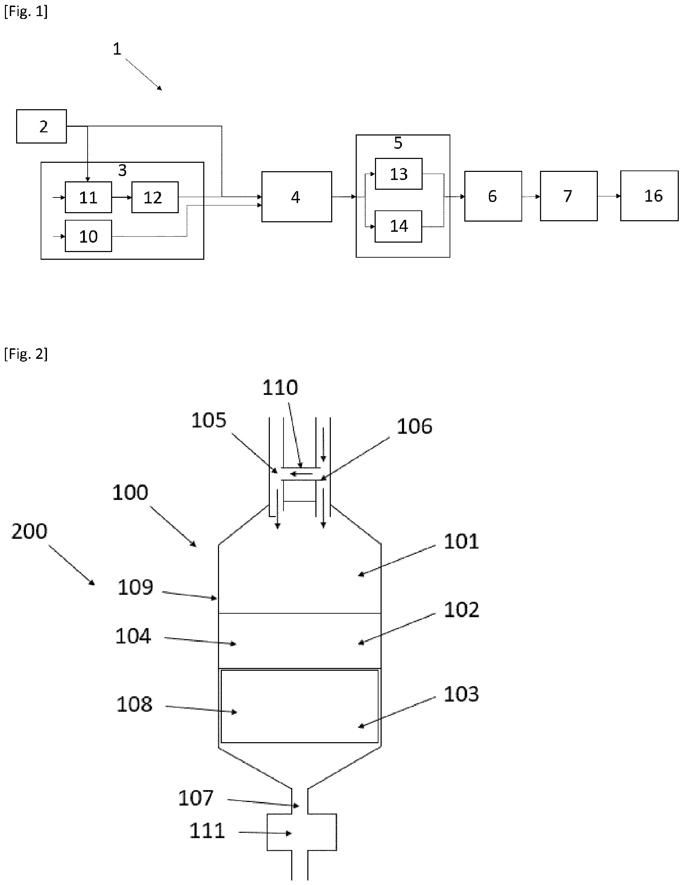

Figure 1 is a schematic view of the process for the production of hydrogen from ammonia The process 1 comprises a step providing an ammonia feed stream to a reactor 2 and a step of feeding an oxidant stream comprising oxygen to the reactor 3.

The step of feeding an oxidant stream comprising oxygen to the reactor 3 comprises a step of providing an additional oxidant stream comprising oxygen to the reactor 10, a step of mixing a main oxidant stream with the ammonia feed stream 11, and a step of feeding said main oxidant stream to the reactor together with the ammonia feed stream 12.

The additional oxidant stream is kept separated from the ammonia feed stream upstream the reactor.

The process 1 comprises a step of non-catalytically partially oxidizing the ammonia feed stream with the oxidant stream 4 in a first zone of the reactor, thus generating heat and producing a partially oxidized stream containing ammonia, nitrogen, water, amounts of nitrogen oxides, and potentially a residual portion of oxygen.

In said partial oxidation step 4, the proportion of oxygen is under-stoechiometric in the step of non-catalytical partial oxidation of the ammonia feed stream.

Alternatively, in an embodiment not represented, the oxidant stream is provided in surplus, and the partially oxidized stream comprises a portion of oxygen that has not reacted during the non-catalytical partial oxidation of the ammonia feed stream.

As the reaction of non-catalytically partially oxidizing the ammonia feed stream is never perfect, the oxidized stream comprises traces of oxygen that have not reacted during the reaction.

A portion of the main oxidant stream fed together with the ammonia feed stream does not react during the step of partial oxidation of the ammonia feed stream 4, and is comprised inside the oxidized stream.

Advantageously, feeding a main oxidant stream 12 mixed with the ammonia feed stream allows to increase the portion of residual oxygen inside the partially oxidized stream.

The process 1 comprises a step of homogenizing the temperature and concentration of the partially oxidized stream 5 in a second zone of the reactor, thus producing an homogenized stream containing ammonia, nitrogen, and water,

The step of homogenizing the temperature and concentration of the partially oxidized stream 5 comprises a step of homogenizing the temperature of the partially oxidized stream inside the second zone 13.

The reactor comprises a reactor packing, in particular a reactor packing supported by the catalytic cracking layer, and the step of homogenizing the temperature and concentration of the partially oxidized stream 13 is performed over said reactor packing.

The step of homogenizing the temperature and concentration of the partially oxidized stream 5 comprises a step of homogenizing the concentration of the partially oxidized stream, in particular homogenizing the concentration of ammonia, nitrogen oxides and potential residual oxygen inside the partially oxidized stream.

The process 1 comprises a step of controlling the temperature inside the second zone of the reactor 15, performed by adjusting the ratio of the oxidant stream in relation to the ammonia feed stream.

The temperature inside the second zone of the reactor is comprised between 600°C and 1200°C, preferably between 700 and 1100°C.

During the step of homogenizing the temperature and concentration of the partially oxidized stream, the variation of the temperature of the partially oxidized stream after contact with the second zone of the reactor, in particular after contact with the reactor packing, is less than 200°C, preferably less than 100°C.

The step of homogenizing the temperature and concentration of the partially oxidized stream 5 is performed downstream the step of partially oxidizing the ammonia feed stream 4, and upstream the step of catalytically cracking the homogenized stream 6 in the direction of the homogenized stream flow.

Said step of homogenizing the temperature and concentration of the partially oxidized stream 5 comprises a step of reducing the amounts of nitrogen oxides inside the homogenized stream performed by reacting the nitrogen oxides with oxygen and ammonia.

The process 1 comprises a step of catalytically cracking ammonia contained in the homogenized stream 6 in an endothermic reaction using the generated heat in a third zone of the reactor, thus creating a cracked gas product containing nitrogen and hydrogen, potentially in addition with water and/or an unconverted portion of ammonia that has not reacted during the step of catalytically cracking the ammonia.

The reactor comprises a catalytic cracking layer and the step of catalytically cracking ammonia 6 is performed over said catalytic cracking layer

The process comprises a step of withdrawing the cracked gas product from the reactor 7.

The process 1 comprises a step of recovering hydrogen 16 from the cracked gas product at the output of the reactor, thus producing a hydrogen product.

Figure 2 is a schematic view of an apparatus 200 arranged for the production of hydrogen from ammonia.

The apparatus 200 comprises a reactor 100 comprising an ammonia feed stream duct 105 arranged to feed said an ammonia feed stream to said reactor, an oxidant stream duct 106 arranged to feed an oxidant stream to the reactor, and a cracked gas product duct 107 arranged to withdraw a cracked gas product from the reactor.

The oxidant feed stream duct 106 is arranged to feed an additional oxidant feed stream to the reactor.

The reactor 100 comprises a main oxidant stream duct 110, fluidically connected to the oxidant feed stream duct 106 and to the ammonia feed stream duct 105.

Said main oxidant stream duct 110 is arranged to route a portion of the oxidant feed stream, called the main oxidant stream, to the ammonia feed stream duct 105, and to mix said main oxidant stream with the ammonia feed stream.

The reactor 100 comprises a first zone 101 arranged to non-catalytically partially oxidize the ammonia feed stream with the oxidant stream and to generate heat for producing a partially oxidized stream containing ammonia, nitrogen, water and amounts of nitrogen oxides.

The reactor 100 comprises a second zone 102 comprising a reactor packing 104 arranged to homogenize the temperature and concentration of the partially oxidized stream and to produce an homogenized stream containing ammonia, nitrogen and water.

The reactor packing 104 consists of a non-catalyic NOx reduction packing, and said non-catalytic NOx reduction packing does not comprise any usual catalytic elements for promoting an endothermic reaction such as ammonia cracking. In particular, the non-catalytic NOx reduction packing does not comprise any Nickel, Cobalt, Iron or precious metal catalyst.

For example, the reactor packing 104 is made of metal or of a metal oxide, for example alumina. Advantageously, the use of non-catalytic material allows the NOx reduction packing to sustain higher temperatures, for example temperatures above 1000°C.

The reactor packing 104 is made of a random packing, in particular composed of randomly arranged particles, for example alumina lumps or thermal protection tiles. Said thermal protection tiles are for example made of a refractory material.

Alternatively, in an embodiment not represented, the reactor packing 104 is made of a structured packing, for example comprises a stacking of perforated metal plates.

The reactor packing 104 is arranged to maximize the surface area inside the second zone 102 of the reactor 100 in order to facilitate the homogenization of the concentration and temperature of the partially oxidized stream.

The reactor packing 104 is also arranged to increase the pressure drop between the first zone 101 and third zone 103 of the reactor 100, such that the pressure drop over the second zone 102 of the reactor is higher than 0.005 bar, preferably higher than 0.01 bar.

The reactor 100 comprises a third zone 103, comprising a catalytic cracking layer 108 and arranged to catalytically crack the ammonia contained in the homogenized stream, thus creating a cracked gas product containing nitrogen and hydrogen.

The catalytic cracking layer 108 supports the reactor packing 104. In other words, the reactor packing is lying on the catalytic cracking layer.

The catalytic cracking layer 108 comprises a catalyst, for example a Nickel containing catalyst.

The first zone 101 of the reactor 100 is placed upstream the second zone 102 of the reactor which is placed upstream the third zone 103 of the reactor in the direction of the ammonia feed stream.

The reactor 100 comprises an envelope 109 wherein the first zone 101, the second zone 102 and the third zone 103 are arranged. In particular, the reactor packing 104 and the catalytic cracking layer 108 are arranged in said envelope.

In particular, the envelope 109 comprises a cylindrical portion, the reactor packing 104 and the catalytic cracking layer 108 are cylindrical and are placed in the cylindrical portion of the envelope.

The apparatus 200 arranged for the production of hydrogen from ammonia comprising comprises a hydrogen recovery unit 111 arranged to recover hydrogen from the cracked gas product, thus producing a hydrogen product.

## Claims

1. Process (1) for the production of hydrogen from ammonia comprising the following steps:
- providing an ammonia feed stream to a reactor (2),
- feeding an oxidant stream comprising oxygen to the reactor (3),
- in a first zone of the reactor, non-catalytically partially oxidizing the ammonia feed stream with the oxidant stream (4), thus generating heat and producing a partially oxidized stream containing ammonia, nitrogen, water, amounts of nitrogen oxides, and potentially a residual portion of oxygen,
- in a second zone of the reactor, homogenizing the temperature and concentration of the partially oxidized stream (5), thus producing an homogenized stream containing ammonia, nitrogen, and water,
- in a third zone of the reactor, catalytically cracking ammonia contained in the homogenized stream in an endothermic reaction using the generated heat (6), thus creating a cracked gas product containing nitrogen and hydrogen
- withdrawing the cracked gas product from the reactor (7).

2. Process (1) according to claim 1, wherein the step of feeding an oxidant stream comprising oxygen to the reactor (3) comprises :
- A step of mixing a main oxidant stream (11) with the ammonia feed stream, and feeding said main oxidant stream (12) to the reactor together with the ammonia feed stream,
- A step of providing an additional oxidant stream (10) comprising oxygen to the reactor, the additional oxidant stream being kept separated from the ammonia feed stream upstream the reactor.

3. Process (1) according to any of the preceding claims, wherein the step of catalytically cracking ammonia (6) is performed over a catalytic cracking layer of the reactor.

4. Process (1) according to any of the preceding claims, wherein the step of homogenizing the temperature and concentration of the partially oxidized stream (5) is performed over a reactor packing, in particular a reactor packing supported by the catalytic cracking layer of the reactor.

5. Process (1) according to any of the preceding claims, wherein the step of homogenizing the temperature and concentration of the partially oxidized stream (5) comprises :
- a step of homogenizing the temperature of the partially oxidized stream inside the second zone (13),
- a step of homogenizing the concentration of the partially oxidized stream (14), in particular homogenizing the concentration of ammonia, nitrogen oxides and potential residual oxygen inside the partially oxidized stream.

6. Process (1) according to claim 5, wherein the step of homogenizing the concentration of ammonia, nitrogen oxides and oxygen inside the partially oxidized stream (14) comprises a step of reducing the amounts of nitrogen oxides inside the homogenized stream.

7. Process (1) according to claim 6, wherein the step of reducing the amounts of nitrogen oxides inside the homogenized stream comprises a step of reacting the nitrogen oxides with oxygen and ammonia.

8. Process (1) according to any of the preceding claims, comprising a step of controlling the temperature inside the second zone of the reactor (15).

9. Process (1) according to any of the preceding claims, wherein the temperature inside the second zone of the reactor is comprised between 600°C and 1200°C, preferably between 700 and 1100°C.

10. Process (1) according to claim 8, potentially in addition with claim 9, wherein the step of controlling the temperature inside the second zone of the reactor (15) is performed by adjusting the ratio of the oxidant stream in relation to the ammonia feed stream.

11. Process (1) according to any of the preceding claims, wherein during the step of homogenizing the temperature and concentration of the partially oxidized stream (5), the variation of the temperature of the partially oxidized stream after contact with the second zone of the reactor, in particular after contact with the reactor packing, is less than 200°C, preferably less than 100°C.

12. Process (1) according to any of the preceding claims, comprising a step of recovering hydrogen from the cracked gas product (16), thus producing a hydrogen product.

13. Reactor (100) arranged for the production of hydrogen from ammonia comprising :
- a first zone (101) arranged to non-catalytically partially oxidize an ammonia feed stream with an oxidant stream and to generate heat for producing a partially oxidized stream containing ammonia, nitrogen, water and amounts of nitrogen oxides,
- a second zone (102) comprising a reactor packing (104) arranged to homogenize the temperature and concentration of the partially oxidized stream and to produce an homogenized stream containing ammonia, nitrogen and water,
- a third zone (103) arranged to catalytically crack the ammonia contained in the homogenized stream and to create a cracked gas product containing nitrogen and hydrogen,
- an ammonia feed stream duct (105) arranged to feed said ammonia feed stream to said reactor,
- an oxidant stream duct (106) arranged to feed said oxidant stream to the reactor.

14. Reactor (100) according to claim 13, wherein the reactor packing (104) is made of a random packing.

15. Apparatus arranged for the production of hydrogen from ammonia comprising
- a reactor according to any of the claims 13 and 14,
- a hydrogen recovery unit arranged to recover hydrogen from the cracked gas product, thus producing a hydrogen product.
